# FASCICULE DE BREVET EUROPEEN

(11) **EP 1 321 345 B1**
(45) Date de publication et mention de la délivrance du brevet: **10.08.2005**
(21) Numéro de dépôt: 02293104.2
(22) Date de dépôt: 16.12.2002
(51) Int. Cl.: B62B 3/18

(54) **Support d'objets volumineux pour chariot emboîtable et chariot emboîtable équipé d'un tel support**
Träger für sperrige Gegenstände auf einem stapelbaren Wagen und stapelbarer Wagen mit solch einem Träger
Support for bulky objects on a nestable cart and nestable cart equipped with such a support

(30) Priorité: 21.12.2001 FR 0116732
(43) Date de publication de la demande: 25.06.2003
(73) Titulaire: CADDIE, 67301 Schiltigheim (FR)
(72) Inventeur: Joseph, Alice, 67301 Schiltigheim Cedex (FR); Le Marchand, Alain, 67116 Reichstett (FR)
(74) Mandataire: Santarelli

(56) Documents cités:
- EP-A- 0 913 310
- DE-U- 6 911 490
- US-A- 4 938 492

## Description

La présente invention concerne un chariot emboîtable adapté à recevoir des objets volumineux.

Plus précisément, elle concerne un chariot emboîtable du genre de ceux mis à disposition de la clientèle dans les grandes surfaces pour transporter ses achats.

Un tel chariot comporte généralement un châssis constitué, d'une part, de deux montants latéraux, dont la partie supérieure supporte une poignée de préhension, et une corbeille et, d'autre part, un socle supportant les montants latéraux et des roues, au moins une roue avant montée pivotante et deux roues arrière.

On a souvent cherché à équiper un tel chariot de moyens permettant le transport d'objets volumineux, souvent lourds, tels que caisses de boissons, sacs de pommes de terre ou autres, sans avoir à les soulever jusque dans la corbeille ; par ailleurs, de tels moyens permettent également d'accroître la surface de chargement du chariot, notamment lorsque la corbeille est de petit volume ou lorsque le socle est dépourvu de plateforme inférieure, généralement à l'avant du socle.

De nombreuses solutions ont été proposées.

Certaines consistent à faire porter un support d'objets par la corbeille, soit à l'avant, comme dans le document DE-A-32 08 691, soit à l'arrière, comme dans le document FR-A-2 530 570 ; ces solutions présentent l'inconvénient de réduire la visibilité lors de la manoeuvre du chariot ; par ailleurs, en cas de chute, les produits tombent d'une hauteur importante.

On a également proposé de placer un support d'objets sous la corbeille ; d'une façon générale, il s'agit d'une grille montée coulissante et/ou articulée, par rapport aux montants latéraux, juste sous la corbeille ; c'est le cas par exemple des chariots décrits dans les documents FR-A-2 645 487, FR-A-2 652 326, FRA- 2 665 133, EP-A-0141 398 ; les produits sont à une hauteur encore importante et, en arrière de la corbeille, gênent l'usager dans ses manoeuvres ; en outre, en position repliée, ces supports d'objets limitent l'emboîtement des chariots.

Dans le document EP-A-0751 057, le support d'objets est en deux parties, une partie fixe et une partie articulée sur les montants latéraux ; les objets sont à mi-hauteur entre le sol et le fond de la corbeille, mais une telle disposition présente également les inconvénients ci-dessus : gêne de l'usager et limitation de l'emboîtement.

L'invention a pour objet un support d'objets pour chariot emboîtable qui, non seulement, ne présente pas les inconvénients ci-dessus mais, de plus, peut être monté sur un chariot existant et fixé sur celui-ci de manière simple.

Selon l'invention, un support d'objets pour chariot emboîtable comportant un châssis et une corbeille, lequel châssis comprend deux traverses, est caractérisé par le fait qu'il comporte deux longerons munis chacun d'une échancrure et portant deux tiges d'assujettissement, les deux échancrures étant adaptées à recevoir l'une des traverses et les deux tiges d'assujettissement à être repliées autour de la deuxième traverse ; la corbeille repose sur les deux traverses auxquelles elle est solidarisée.

Avantageusement, le support d'objets est en fils soudés portés par les longerons.

De préférence, le support d'objets comporte une ceinture en forme générale de U dont les ailes sont reliées par deux barres qui s'étendent parallèlement à l'âme du U et qui sont solidaires des longerons.

Avantageusement, la ceinture et les barres supportent deux épingles pliées globalement à 90 degrés dont les bords sont avantageusement relevés pour le calage des objets.

De préférence, chaque longeron est en tôle et disposé sur chant par rapport au plan défini par les barres.

Avantageusement, les échancrures sont ouvertes vers les tiges d'assujettissement et s'étendent le long de l'extrémité dite avant des longerons.

De préférence, les longerons supportent les tiges d'assujettissement par l'intermédiaire de barres de support disposées transversalement, d'un longeron à l'autre, les tiges d'assujettissement étant fixées directement aux barres de support.

L'invention a également pour objet un chariot comportant un châssis et une corbeille, laquelle repose sur deux traverses du châssis auxquelles elle est solidarisée, ledit chariot comportant par ailleurs un support d'objets tel que ci-dessus.

De préférence, l'une des traverses est coiffée par les échancrures des longerons et les tiges d'assujettissement sont repliées autour de l'autre traverse.

Avantageusement, le châssis comprend deux montants latéraux et un socle constitué de deux jambes reliées par les traverses, caractérisé par le fait que les dimensions transversales du support d'objets sont telles qu'il peut passer entre les deux jambes du châssis.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue schématique en élévation d'un chariot équipé d'un support d'objets selon l'invention ;
- la figure 2 est une vue partielle, à plus grande échelle par rapport à la figure 1, montrant le support d'objets ;
- la figure 3 est une vue de dessus par rapport à la figure 1 ;
- la figure 4 montre l'emboîtement de deux chariots équipés du support d'objets selon l'invention.

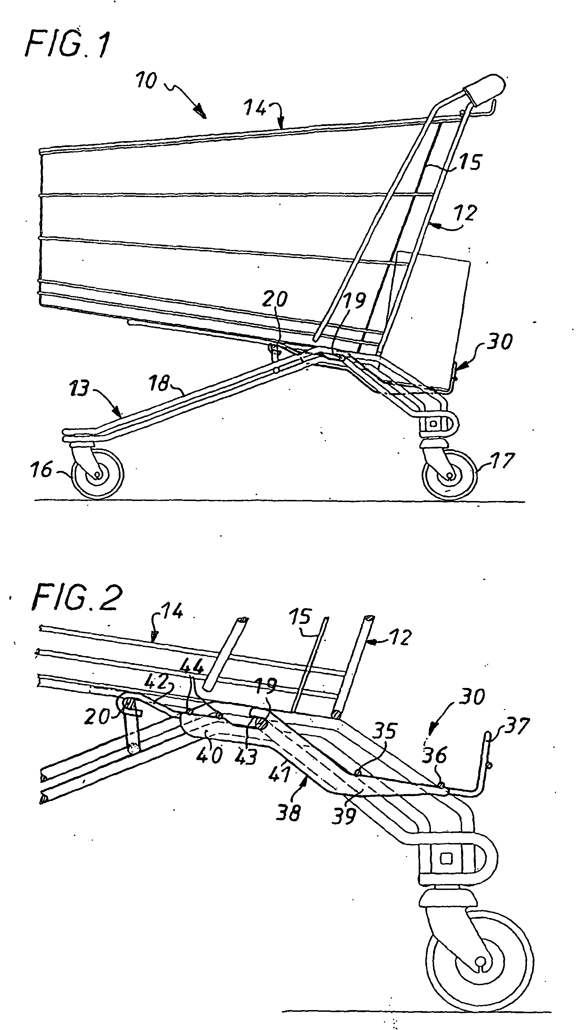

Le chariot 10 représenté sur la figure 1 comporte un châssis constitué de deux montants latéraux 12 et d'un socle 13.

A leur extrémité supérieure, les montants latéraux 12 supportent une poignée de préhension ou barre de manoeuvre non représentée et, sous celle-ci, un panier ou corbeille 14, de forme générale classique, du genre pyramidale, ayant à l'arrière 15 une paroi arrière, en forme de volet articulé à sa partie supérieure en sorte qu'il peut, comme on le sait, pivoter vers l'intérieur de la corbeille 14, poussé par l'avant de la corbeille du chariot qui suit, lors de l'emboîtement de deux tels chariots ; la corbeille 14 est solidaire par sa partie arrière des montants 12 en étant placée entre ceux-ci.

Le volet arrière 15 supporte, ou non, un siège enfant.

Le socle 13 supporte une (ou deux) roue(s) avant 16 et deux roues arrière 17.

Ici, le socle 13 et les montants latéraux 12 sont des pièces séparées assemblées, par exemple par soudage.

Le socle 13 est constitué de deux jambes 18 reliées par des traverses, notamment deux traverses 19 et 20.

Chaque jambe 18 est réalisée par deux fils parallèles cintrés à concavité dirigée vers le sol ; l'extrémité arrière des jambes 18 porte les roues arrière 17, tandis que leurs extrémités avant sont reliées par une entretoise transversale qui porte les roues avant 16 ; cette entretoise est plus courte que la traverse 19 située le plus à l'arrière du chariot en sorte que, lors de l'emboîtement, les socles 13 peuvent s'encastrer les uns dans les autres.

Le chariot 10 est équipé d'un support d'objets 30 permettant notamment le transport d'objets volumineux, souvent lourds, tels que caisses de boissons ou autres, sans avoir à les soulever jusque dans la corbeille 14.

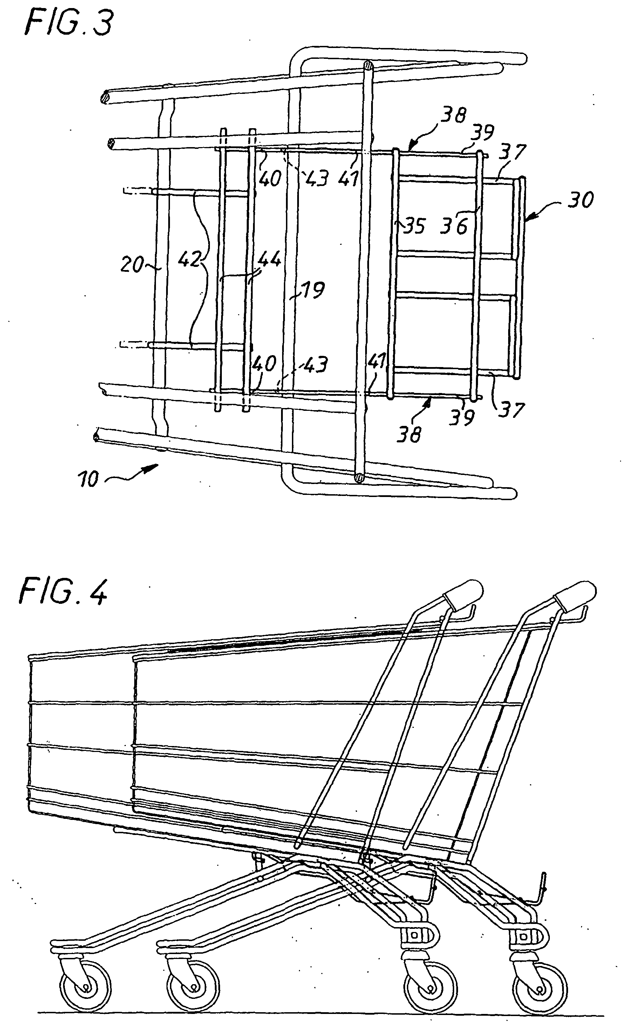

Ici, le support d'objets 30, mieux visible sur les figures 2 et 3, est en fils soudés et comporte deux barres 35, 36 qui supportent deux épingles 37 en U pliées globalement à 90 degrés, les bords relevés permettant le calage des objets, dans le sens axial par rapport au chariot 10, c'est-à-dire dans la direction de déplacement du chariot 10.

Sous les barres 35 et 36, dûment assujettis à celles-ci, le support d'objets 30 présente deux longerons 38 dont la longueur est très supérieure à la distance qui sépare les barres 35 et 36 en sorte que ses extrémités s'étendent largement au delà de la barre 35 qui est située le plus à l'avant.

Chaque longeron 38 est avantageusement en tôle et disposé sur chant par rapport au plan défini par les barres 35, 36.

Les extrémités 39 et 40 de chaque longeron 38 sont décalées l'une par rapport à l'autre, verticalement en référence à la figure 2, en étant reliées par une partie intermédiaire 41 formant un angle avec lesdites extrémités 39 et 40 ; l'extrémité 39, dite extrémité arrière, est solidarisée aux barres 35 et 36, et l'extrémité 40, dite extrémité arrière, supporte des tiges d'assujettissement 42, ici deux tiges d'assujettissement 42, dont le rôle apparaîtra ci-après.

Chaque longeron 38 présente une échancrure 43 disposée ici dans la zone de raccordement de l'extrémité avant 40 et de la partie intermédiaire 41 du longeron 38 ; l'échancrure 43 est ouverte vers les tiges d'assujettissement 42 ; elle s'étend ici globalement le long de l'extrémité avant 40 du longeron 38.

Ici, l'extrémité avant 40 supporte les tiges d'assujettissement 42 par l'intermédiaire de barres de support 44, ici deux barres de support 44 parallèles disposées transversalement, d'un longeron 38 à l'autre, les tiges d'assujettissement 42 étant fixées directement aux barres de support 44.

La forme générale, tant des longerons 38 que des tiges d'assujettissement 42, est telle qu'en présentant le support d'objets 30 depuis l'arrière du chariot sous la corbeille 14 on puisse, d'une part, poser les tiges d'assujettissement 42 sur la deuxième traverse avant 20 comme montré en pointillés figures 2 et 3, et, d'autre part, appréhender la première traverse 19 ou traverse arrière à l'aide des échancrures 43 dans lesquelles elle prend place, comme montré sur les figures ; en repliant sur elle-même, autour de la deuxième traverse 20, l'extrémité des tiges d'assujettissement 42 qui s'étend au delà de ladite traverse 20, par exemple à l'aide d'un outil tubulaire, le support d'objet 30 est fixé sur le chariot, comme montré en traits pleins sur les figures.

Dans cette position opérationnelle du support d'objets 30, la partie support proprement dite, matérialisée notamment par les barres 35, 36 et les épingles 37, est suffisamment basse pour, non seulement ne pas gêner l'emboîtement de tels chariots ainsi équipés, mais également ne pas avoir à soulever trop haut les objets volumineux, souvent lourds.

Bien entendu, l'emboîtement est rendu possible en donnant au support d'objets 30 des dimensions telles, notamment transversales, qu'il peut passer entre les deux jambes 18 du châssis 11.

La figure 4 montre deux chariots équipés du support d'objets selon l'invention et emboîtés.

Par ailleurs, cette partie support proprement dite ne s'étend pratiquement pas au delà de l'aplomb de la barre de préhension du chariot, et l'usager n'est pas gêné dans ses manoeuvres.

On appréciera que la mise en oeuvre d'un tel support d'objets est très facile, c'est-à-dire qu'il est facile, grâce au support d'objets selon l'invention, d'équiper d'un support d'objets un parc de chariots qui en étaient dépourvus, de manière simple sans soudage.

On comprendra également qu'une opération de démontage est possible ; il suffit de redresser les extrémités repliées des tiges d'assujettissement 42 et de dégager complètement le support d'objets 30.

## Revendications

1. Support d'objets pour chariot emboîtable comportant un châssis et une corbeille (14), lequel châssis comprend deux traverses (19,20), **caractérisé par le fait que** ledit support d'objets comporte deux longerons (38) munis chacun d'une échancrure (43) et portant deux tiges d'assujettissement (42), les deux échancrures (43) étant adaptées à recevoir l'une (19) des traverses et les deux tiges d'assujettissement (42) à être repliées autour de la deuxième traverse (20).

2. Support d'objets selon la revendication 1, **caractérisé par le fait que** la corbeille (14) repose sur les deux traverses (19,20) auxquelles elle est solidarisée.

3. Support d'objets selon l'une des revendications 1 ou 2, **caractérisé par le fait qu'**il est en fils soudés portés par les longerons (38).

4. Support d'objets selon l'une des revendications 1 à 3, **caractérisé par le fait qu'**il comporte deux barres (35,36) qui s'étendent parallèlement et qui sont solidaires des longerons (38).

5. Support d'objets selon la revendication 4, **caractérisé par le fait que** la les barres (35,36) supportent deux épingles (37) en U pliées globalement à 90 degrés, les bords relevés permettant le calage des objets dans le sens axial.

6. Support d'objets selon l'une des revendications 4 ou 5, **caractérisé par le fait que** chaque longeron (38) est en tôle et disposé sur chant par rapport au plan défini par les barres (35,36).

7. Support d'objets selon l'une des revendications 1 à 6, **caractérisé par le fait que** les échancrures (43) sont ouvertes vers les tiges d'assujettissement (42) et s'étendent le long de l'extrémité dite avant (40) des longerons (38).

8. Support d'objets selon l'une des revendications 1 à 7, **caractérisé par le fait que** les longerons (38) supportent les tiges d'assujettissement (42) par l'intermédiaire de barres de support (44) disposées transversalement, d'un longeron (38) à l'autre (38), les tiges d'assujettissement (42) étant fixées directement aux barres de support (44).

9. Chariot emboîtable comportant un châssis et une corbeille (14), laquelle repose sur deux traverses (19,20) du châssis auxquelles elle est solidarisée, ledit chariot comportant par ailleurs à l'arrière un support d'objets, **caractérisé par le fait que** le support d'objets est selon l'une des revendications 1 à 8.

10. Chariot emboîtable selon la revendication 9, **caractérisé par le fait que** l'une (19) des traverses est coiffée par les échancrures (43) des longerons (38) et les tiges d'assujettissement (42) sont repliées autour de l'autre (20) traverse.

11. Chariot emboîtable selon l'une des revendications 9 ou 10, dans lequel le châssis (11) comprend deux montants latéraux (12) et un socle (13) constitué de deux jambes (18) reliées par les traverses (19,20), **caractérisé par le fait que** les dimensions transversales du support d'objets (30) sont telles qu'il peut passer entre les deux jambes (18) du châssis (11).

## Claims

1. An article support for a nestable trolley, comprising a chassis and a basket (14), said chassis comprising two cross members (19, 20), **characterized in that** said article support comprises two side members (38) each provided with a notch (43) and carrying two securing rods (42), the two notches (43) being adapted to receive one (19) of the cross members and the two securing rods (42) being adapted to be bent around the second cross member (20).

2. An article support according to claim 1, **characterized in that** the basket (14) rests on the two cross members (19, 20) to which it is affixed.

3. An article support according to claim 1 or claim 2, **characterized in that** it is formed from welded wire carried by the side members (38).

4. An article support according to one of claims 1 to 3, **characterized in that** it comprises two parallel bars (35, 36) which are fixed to the side members (38).

5. An article support according to claim 4, **characterized in that** the bars (35, 36) support two U-shaped pins (37) bent at 90° overall, the lifted sides allowing articles to be wedged in the axial direction.

6. An article support according to claim 4 or claim 5, **characterized in that** each side member (38) is formed from plate and is disposed edgeways with respect to the plane defined by the bars (35, 36).

7. An article support according to one of claims 1 to 6, **characterized in that** the notches (43) are open towards the securing rods (42) and extend along the end termed the front end (40) of the side members (38).

8. An article support according to one of claims 1 to 7, **characterized in that** the side members (38) support the securing rods (42) via transversely disposed support bars (44) extending from one side member (38) to the other (38), the securing rods (42) being fixed directly to the support bars (44).

9. A nestable trolley comprising a chassis and a basket (14) which rests on two cross members (19, 20) of the chassis to which it is fixed, said trolley further comprising an article support at its rear, **characterized in that** the article support is in accordance with one of claims 1 to 8.

10. A nestable trolley according to claim 9, **characterized in that** one (19) of the cross members is overlapped by the notches (43) of the side members (38) and the securing rods (42) are bent around the other cross member (20).

11. A nestable trolley according to claim 9 or claim 10, in which the chassis (11) comprises two lateral uprights (12) and a base (13) constituted by two legs (18) connected via the cross members (19, 20), **characterized in that** the transverse dimensions of the article support (30) are such that it can pass between the two legs (18) of the chassis (11).

## Patentansprüche

1. Artikelträger für einen ineinandersteckbaren Wagen, umfassend ein Gestell und einen Korb (14), wobei das Gestell zwei Querträger (19, 20) aufweist, **dadurch gekennzeichnet, dass** der Artikelträger zwei Längsträger (38) aufweist, die jeweils mit einer Aussparung (43) versehen sind und zwei Befestigungsstangen (42) tragen, wobei die beiden Aussparungen (43) dafür ausgelegt sind, einen (19) der Querträger aufzunehmen, und die beiden Befestigungsstangen (42) dafür ausgelegt sind, um die zweite Querstange (20) herum gebogen werden.

2. Artikelträger nach Anspruch 1, **dadurch gekennzeichnet, dass** der Korb (14) auf den beiden Querträgern (19, 20) aufliegt, mit denen er fest verbunden ist.

3. Artikelträger nach einem der Ansprüche 1 oder 2, **dadurch gekennzeichnet, dass** er aus verschweißten Drähten besteht, die von den Längsträgern (38) getragen sind.

4. Artikelträger nach einem der Ansprüche 1 bis 3, **dadurch gekennzeichnet, dass** er zwei Stangen (35, 36) aufweist, die sich parallel erstrecken und die mit den Längsträgern (38) fest verbunden sind.

5. Artikelträger nach Anspruch 4, **dadurch gekennzeichnet, dass** die Stangen (35, 36) zwei U-förmige, insgesamt um 90° gebogene Spangen (37) tragen, wobei die aufgebogenen Ränder die Positionierung der Artikel in der axialen Richtung gestatten.

6. Artikelträger nach einem der Ansprüche 4 oder 5, **dadurch gekennzeichnet, dass** jeder Längsträger (38) aus Blech besteht und bezüglich der durch die Stangen (35, 36) definierten Ebene hochkant angeordnet ist.

7. Artikelträger nach einem der Ansprüche 1 bis 6, **dadurch gekennzeichnet, dass** die Aussparungen (43) auf die Befestigungsstangen (42) zu offen sind und sich längs des sogenannten vorderen Endes (40) der Längsträger (38) erstrekken.

8. Artikelträger nach einem der Ansprüche 1 bis 7, **dadurch gekennzeichnet**, die Längsträger (38) die Befestigungsstangen (42) über Tragstangen (44) tragen, die in Querrichtung von einem Längsträger (38) zum anderen (38) angeordnet sind, wobei die Befestigungsstangen (42) direkt an den Tragstangen (44) befestigt sind.

9. Ineinandersteckbarer Wagen, umfassend ein Gestell und einen Korb (14), der auf zwei Querträgern (19, 20) des Gestells aufliegt, mit denen er fest verbunden ist, wobei der Wagen ferner hinten einen Artikelträger aufweist, **dadurch gekennzeichnet, dass** es sich dabei um einen Artikelträger nach einem der Ansprüche 1 bis 8 handelt.

10. Ineinandersteckbarer Wagen nach Anspruch 9, **dadurch gekennzeichnet, dass** einer (19) der Querträger von den Aussparungen (43) der Längsträger (38) überdeckt wird und die Befestigungsstangen (42) um den anderen (20) Querträger gebogen sind.

11. Ineinandersteckbarer Wagen nach einem der Ansprüche 9 oder 10, bei dem das Gestell (11) zwei seitliche Ständer (12) und einen Sockel (13) umfasst, das aus zwei durch die Querträger (19, 20) miteinander verbundenen Beinen (18) besteht, **dadurch gekennzeichnet, dass** die Querabmessungen des Artikelträgers (30) so gewählt sind, dass er zwischen die beiden Beine (18) des Gestells (11) eingeführt werden kann.
